# EUROPEAN PATENT APPLICATION

(11) **EP 4 832 595 A1**
(43) Date of publication of application: **28.10.2026**
(21) Application number: 24924509.3
(22) Date of filing: 23.12.2024
(51) Int. Cl.: H04W 52/02

(54) **COMMUNICATION METHOD, APPARATUS, SYSTEM, AND CHIP**

(30) Priority: 18.02.2024 CN 202410183260
(71) Applicant: Honor Device Co., Ltd., Shenzhen, Guangdong 518040 (CN)
(72) Inventor: CAO, Yongzhao, Shenzhen, Guangdong 518040 (CN); ZENG, YongBo, Shenzhen, Guangdong 518040 (CN)
(74) Representative: Gill Jennings & Every LLP
(86) International application number: PCT/CN2024/141325
(87) International publication number: WO 2025/171747

(57) **Abstract**

A communication method, apparatus, and system, and a chip are provided. The method includes: A network device sends a first signal to a terminal. The first signal includes an OOK signal modulated by a sequence. The first signal carries information about a wake-up signal. The information about the wake-up signal is carried in the OOK signal, or the information about the wake-up signal is carried in the OOK signal and the sequence. Therefore, this application provides an optimized solution for transferring information about a wake-up signal between the network device and the terminal.

## Description

This application claims priority to Chinese Patent Application No. 202410183260.0, filed with the China National Intellectual Property Administration on February 18, 2024 and entitled "COMMUNICATION METHOD, APPARATUS, AND SYSTEM, AND CHIP", which is incorporated herein by reference in its entirety.

### TECHNICAL FIELD

This application relates to the field of communication technologies, and in particular, to a communication method, apparatus, and system, and a chip.

### BACKGROUND

An important challenge for an internet of things terminal is device power consumption. Although an existing terminal power saving technology can greatly reduce power consumption of a terminal that supports 5G (5th generation, namely, a 5th generation mobile communication technology), there is still a relatively large gap to meet a power consumption requirement of the internet of things terminal.

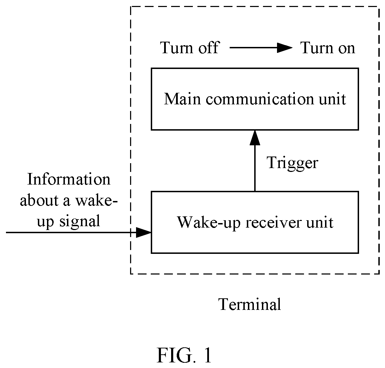

In a low-power terminal in 5G mobile terminals (the 5G mobile terminals are mobile terminals that support 5G, for example, 5G smartphones or 5G smartwatches), a low-power wake-up receiver is introduced on the basis of an existing communication unit to process information about a wake-up signal, so as to maintain a relatively low latency while reducing power consumption. FIG. 1 is a schematic diagram of a structure of a low-power terminal. The terminal may be divided into a main communication unit and a wake-up receiver unit. When there is no service requirement, the terminal turns off the main communication unit, and turns on only the wake-up receiver unit. When a network device needs to communicate with the terminal, information about a low-power wake-up signal may be sent to the terminal. After successfully detecting the information about the wake-up signal, the wake-up receiver unit on the terminal side triggers the main communication unit to turn on. Then, the main communication unit establishes a communication connection to the network to complete service sending and receiving.

However, how to transfer a newly introduced signal, namely, the low-power wake-up signal (low power-wake up signal, LP-WUS) (briefly referred to as a wake-up signal (wake up signal, WUS)) between the network device and the terminal is a problem.

### SUMMARY

Embodiments of this application provide a communication method, apparatus, and system, and a chip, to provide an optimized solution for transferring a WUS between a network device and a terminal.

According to a first aspect, a communication method is provided. The method includes: receiving a first signal. The first signal includes an on-off keying OOK signal modulated by a sequence. The first signal carries information about a wake-up signal. The information about the wake-up signal is carried in the OOK signal, or the information about the wake-up signal is carried in the OOK signal and the sequence.

For example, the modulation sequence may be referred to as an overlaid sequence. The sequence may be understood as a sequence used to modulate the OOK signal. For example, the OOK signal may be modulated by using a ZC sequence or an M sequence.

With reference to the first aspect, in a possible implementation, the method further includes: determining whether the sequence carries a part of the information about the wake-up signal.

With reference to the first aspect, in another possible implementation, the determining whether the sequence carries a part of the information about the wake-up signal includes: receiving first indication information. The first indication information is used to indicate whether the sequence carries a part of the information about the wake-up signal.

With reference to the first aspect, in another possible implementation, the first indication information is carried in any one of the following signals: system information SI, radio resource control RRC signaling, a medium access control-control element MAC-CE, or downlink control information DCI.

With reference to the first aspect, in another possible implementation, the method further includes: receiving configuration information. The configuration information is used to indicate a signal quality threshold. The determining whether the sequence carries a part of the information about the wake-up signal includes: when signal quality of a terminal is greater than or equal to the signal quality threshold, determining that the sequence carries a part of the information about the wake-up signal.

With reference to the first aspect, in another possible implementation, the method further includes: sending second indication information. The second indication information is used to indicate a capability of a terminal and/or a type of the terminal. The determining whether the sequence carries a part of the information about the wake-up signal includes: determining, based on the capability of the terminal and/or the type of the terminal, whether the sequence carries a part of the information about the wake-up signal.

With reference to the first aspect, in another possible implementation, the determining whether the sequence carries a part of the information about the wake-up signal includes: when the sequence is a preset first sequence, determining that the sequence does not carry a part of the information about the wake-up signal.

With reference to the first aspect, in another possible implementation, the determining whether the sequence carries a part of the information about the wake-up signal includes: determining, based on at least one of a bandwidth size, a signal detection manner, or a waveform generation method, whether the sequence carries a part of the information about the wake-up signal. The signal detection manner includes continuous detection and periodic detection, and the waveform generation method includes OOK-1 and OOK-4.

With reference to the first aspect, in another possible implementation, the OOK signal includes third indication information, and the third indication information is used to indicate whether the sequence carries a part of the information about the wake-up signal. The determining whether the sequence carries a part of the information about the wake-up signal includes: determining, based on the third indication information, whether the sequence carries a part of the information about the wake-up signal.

With reference to the first aspect, in another possible implementation, the method further includes: waking up a main communication unit based on demodulated information about the wake-up signal.

For example, the method may be implemented by a terminal, or a chip or a circuit used in a terminal.

According to a second aspect, a communication method is provided. The method includes: sending a first signal. The first signal includes an on-off keying OOK signal modulated by a sequence. The first signal carries information about a wake-up signal. The information about the wake-up signal is carried in the OOK signal, or the information about the wake-up signal is carried in the OOK signal and the sequence.

With reference to the second aspect, in a possible implementation, the method further includes: sending first indication information. The first indication information is used to indicate whether the sequence carries a part of the information about the wake-up signal.

With reference to the second aspect, in another possible implementation, the first indication information is carried in any one of the following signals: system information SI, radio resource control RRC signaling, a medium access control-control element MAC-CE, or downlink control information DCI.

With reference to the second aspect, in another possible implementation, the method further includes: receiving first information, where the first information includes signal quality of a terminal; and when the signal quality of the terminal is greater than or equal to a signal quality threshold, carrying a part of the information about the wake-up signal in the sequence.

With reference to the second aspect, in another possible implementation, the method further includes: receiving second indication information, where the second indication information is used to indicate a capability of a terminal and/or a type of the terminal; and determining, based on the capability of the terminal and/or the type of the terminal, whether to carry a part of the information about the wake-up signal in the sequence.

With reference to the second aspect, in another possible implementation, the method further includes: when the sequence is a preset first sequence, determining not to carry a part of the information about the wake-up signal in the sequence.

With reference to the second aspect, in another possible implementation, the method further includes: determining, based on at least one of a bandwidth size, a signal detection manner, or a waveform generation method, whether to carry a part of the information about the wake-up signal in the sequence. The signal detection manner includes continuous detection and periodic detection, and the waveform generation method includes OOK-1 and OOK-4.

With reference to the second aspect, in another possible implementation, the OOK signal includes third indication information, and the third indication information is used to indicate whether the sequence carries a part of the information about the wake-up signal.

For example, the method may be implemented by a network device, or a chip or a circuit used in a network device.

According to a third aspect, a communication apparatus is provided, configured to implement the communication method in any one of the first aspect or the implementations of the first aspect. The apparatus may be a terminal, may be a module (for example, a processor, a chip, or a chip system) applied to a terminal, or may be a logical node, a logical module, or software that can implement all or a part of functions of a terminal. In an implementation, the communication apparatus may include a sending unit and a receiving unit, and may further include a processing unit. The sending unit and the receiving unit may be independent, or may be combined (which may be referred to as a "transceiver unit").

According to a fourth aspect, a communication apparatus is provided, configured to implement the communication method in any one of the fourth aspect or the implementations of the fourth aspect. The apparatus may be a network device, may be a module (for example, a processor, a chip, or a chip system) applied to a network device, or may be a logical node, a logical module, or software that can implement all or a part of functions of a network device. In an implementation, the communication apparatus may include a sending unit and a receiving unit, and may further include a processing unit. The sending unit and the receiving unit may be independent, or may be combined (which may be referred to as a "transceiver unit").

In a possible implementation, the communication apparatus in the third aspect and the fourth aspect includes units configured to respectively perform the method in any one of or any one of the implementations of the first aspect or the second aspect.

When the communication apparatus is configured to implement the method in any one of the first aspect or the implementations of the first aspect, the transceiver unit is configured to receive a first signal. The first signal includes an on-off keying OOK signal modulated by a sequence. The first signal carries information about a wake-up signal. The information about the wake-up signal is carried in the OOK signal, or the information about the wake-up signal is carried in the OOK signal and the sequence.

For example, the modulation sequence may be referred to as an overlaid sequence. The sequence may be understood as a sequence used to modulate the OOK signal. For example, the

OOK signal may be modulated by using a ZC sequence or an M sequence.

Optionally, the processing unit is configured to determine whether the sequence carries a part of the information about the wake-up signal.

Optionally, the transceiver unit is further configured to receive first indication information. The first indication information is used to indicate whether the sequence carries a part of the information about the wake-up signal.

Optionally, the first indication information is carried in any one of the following signals: system information SI, radio resource control RRC signaling, a medium access control-control element MAC-CE, or downlink control information DCI.

Optionally, the transceiver unit is further configured to receive configuration information. The configuration information is used to indicate a signal quality threshold. The processing unit is further configured to: when signal quality of a terminal is greater than or equal to the signal quality threshold, determine that the sequence carries a part of the information about the wake-up signal.

Optionally, the transceiver unit is further configured to send second indication information. The second indication information is used to indicate a capability of a terminal and/or a type of the terminal. The processing unit is further configured to determine, based on the capability of the terminal and/or the type of the terminal, whether the sequence carries a part of the information about the wake-up signal.

Optionally, the processing unit is further configured to: when the sequence is a preset first sequence, determine that the sequence does not carry a part of the information about the wake-up signal.

Optionally, the processing unit is further configured to determine, based on at least one of a bandwidth size, a signal detection manner, or a waveform generation method, whether the sequence carries a part of the information about the wake-up signal. The signal detection manner includes continuous detection and periodic detection, and the waveform generation method includes OOK-1 and OOK-4.

Optionally, the OOK signal includes third indication information, and the third indication information is used to indicate whether the sequence carries a part of the information about the wake-up signal. The processing unit is further configured to determine, based on the third indication information, whether the sequence carries a part of the information about the wake-up signal.

Optionally, the processing unit is further configured to wake up a main communication unit based on demodulated information about the wake-up signal.

When the communication apparatus is configured to implement the method in any one of the second aspect or the implementations of the second aspect, the transceiver unit is configured to send a first signal. The first signal includes an on-off keying OOK signal modulated by a sequence. The first signal carries information about a wake-up signal. The information about the wake-up signal is carried in the OOK signal, or the information about the wake-up signal is carried in the OOK signal and the sequence.

Optionally, the transceiver unit is further configured to send first indication information. The first indication information is used to indicate whether the sequence carries a part of the information about the wake-up signal.

Optionally, the first indication information is carried in any one of the following signals: system information SI, radio resource control RRC signaling, a medium access control-control element MAC-CE, or downlink control information DCI.

Optionally, the transceiver unit is further configured to receive first information. The first information includes signal quality of a terminal. The processing unit is configured to: when the signal quality of the terminal is greater than or equal to a signal quality threshold, carry a part of the information about the wake-up signal in the sequence.

Optionally, the transceiver unit is further configured to receive second indication information. The second indication information is used to indicate a capability of a terminal and/or a type of the terminal. The processing unit is further configured to determine, based on the capability of the terminal and/or the type of the terminal, whether to carry a part of the information about the wake-up signal in the sequence.

Optionally, the processing unit is further configured to: when the sequence is a preset first sequence, determine not to carry a part of the information about the wake-up signal in the sequence.

Optionally, the processing unit is further configured to determine, based on at least one of a bandwidth size, a signal detection manner, or a waveform generation method, whether to carry a part of the information about the wake-up signal in the sequence. The signal detection manner includes continuous detection and periodic detection, and the waveform generation method includes OOK-1 and OOK-4.

Optionally, the OOK signal includes third indication information, and the third indication information is used to indicate whether the sequence carries a part of the information about the wake-up signal.

With reference to the first aspect to the fourth aspect, in a possible implementation, the information about the wake-up signal includes N bits. The N bits include N1 bits and N2 bits, and N=N1+N2. The N1 bits are carried in the OOK signal, and the N2 bits are carried in the sequence. All of N, N1, and N2 are positive integers.

With reference to the first aspect to the fourth aspect, in another possible implementation, the N1 bits are primary information, and the N2 bits are secondary information. Alternatively, the N2 bits are mandatory information, and the N1 bits are optional information.

With reference to the first aspect to the fourth aspect, in another possible implementation, the information about the wake-up signal includes N bits. The N bits are separately carried in the OOK signal and the sequence, and N is a positive integer.

With reference to the first aspect to the fourth aspect, in another possible implementation, the N bits are bits before encoding.

Alternatively, the N bits are encoded bits.

With reference to the first aspect to the fourth aspect, in another possible implementation, a bit value corresponding to the sequence being a preset second sequence is different from a bit value corresponding to the sequence being a preset third sequence.

With reference to the first aspect to the fourth aspect, in another possible implementation, the sequence is a ZC sequence or an M sequence.

In another possible implementation, the communication apparatus in the third aspect and the fourth aspect includes a processor coupled to a storage. The processor is configured to implement that the apparatus performs a corresponding function in the foregoing communication method. The storage is configured to be coupled to the processor, and stores a program (instructions) and/or data necessary for the apparatus. Optionally, the communication apparatus may further include a communication interface, configured to implement communication between the apparatus and another network element. Optionally, the storage may be located inside the communication apparatus, or may be located outside the communication apparatus.

In still another possible implementation, the communication apparatus in the third aspect and the fourth aspect includes a processor and a transceiver apparatus. The processor is coupled to the transceiver apparatus, and the processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from a communication apparatus other than the communication apparatus, and send the signal to the processor, or send a signal from the processor to a communication apparatus other than the communication apparatus. When the communication apparatus is a chip, the transceiver apparatus is a transceiver circuit or an input/output interface.

When the communication apparatus in the third aspect and the fourth aspect is a chip, the sending unit may be an output unit, for example, an output circuit or a communication interface, and the receiving unit may be an input unit, for example, an input circuit or a communication interface. When the communication apparatus is a terminal, the sending unit may be a transmitter, and the receiving unit may be a receiver.

According to a fifth aspect, a computer-readable storage medium is provided. The computer-readable storage medium stores a computer program or instructions. When the computer program or the instructions are executed, the method in any one of the first aspect, the second aspect, or the implementations of the first aspect or the second aspect is implemented.

According to a sixth aspect, a computer program product including instructions is provided. When the instructions are run on a communication apparatus, the communication apparatus is enabled to perform the method in any one of the first aspect, the second aspect, or the implementations of the first aspect or the second aspect.

According to a seventh aspect, a communication system is provided. The communication system includes the communication apparatus in the third aspect and the communication apparatus in the fourth aspect.

The communication solutions provided in embodiments of this application have the following beneficial effects:

A network device sends a first signal to a terminal. The first signal includes an OOK signal modulated by a sequence. The first signal carries information about a wake-up signal. The information about the wake-up signal is carried in the OOK signal, or the information about the wake-up signal is carried in the OOK signal and the sequence. Therefore, an optimized solution for transferring information about a wake-up signal between the network device and the terminal is provided.

### BRIEF DESCRIPTION OF DRAWINGS

FIG. 1 is a schematic diagram of a structure of a low-power terminal;
FIG. 2 is a schematic diagram of compatibility between a low-power wake-up signal and an existing signal waveform;
FIG. 3 is a schematic analysis diagram of standby duration of a 5G smartwatch in different discontinuous reception cycles;
FIG. 4 is a schematic diagram of a principle of OOK modulation;
FIG. 5 is a schematic diagram of waveform generation in OOK-1;
FIG. 6 is a schematic diagram of beam generation in OOK-4;
FIG. 7A is a schematic diagram of an architecture of a communication system according to an embodiment of this application;
FIG. 7B is a schematic diagram of an architecture of another communication system according to an embodiment of this application;
FIG. 8 is a schematic diagram of an architecture of still another communication system according to an embodiment of this application;
FIG. 9 is a schematic flowchart of a communication method according to an embodiment of this application;
FIG. 10 is a schematic diagram of an OOK signal and a sequence carrying information about a wake-up signal according to an embodiment of this application;
FIG. 11 is a schematic diagram of a structure of a communication apparatus according to an embodiment of this application; and
FIG. 12 is a schematic diagram of a structure of another communication apparatus according to an embodiment of this application.

### DESCRIPTION OF EMBODIMENTS

The solution provided in embodiments of this application is described below in detail with reference to the accompanying drawings.

An important challenge for an internet of things terminal is device power consumption. Since the 3rd generation partnership project (3^{rd} generation partnership project, 3GPP) release 16 (release, R16), the 3GPP has been studying power saving technologies for 5G terminals. Standardized terminal power saving features are shown in Table 1:

**Table 1 Terminal power saving features in 5G R16/R17**

| Standard release | Terminal power saving feature |
|---|---|
| R16 | 1. Information about a wake-up signal for discontinuous reception in a radio resource control connected mode |
| | 2. Adaptive quantity of downlink multiple-input multiple-output layers in a connected mode |
| | 3. Terminal assistance information reporting |
| | 4. Secondary carrier dormancy |
| | 5. Radio resource management measurement relaxation in an idle (idle) or inactive (inactive) mode |
| R17 | 1. Paging early indication |
| | 2. Extended discontinuous reception |
| | 3. Further radio resource management (radio resource management, RRM) measurement relaxation |
| | 4. Power saving for physical downlink control channel monitoring in the connected mode |
| | 5. Radio link monitoring/beam failure detection measurement relaxation in the connected mode |
| | 6. Signal measurement in the idle/inactive mode |
| | 7. Small data transmission in the inactive mode |

Although an existing terminal power saving technology can greatly reduce power consumption of the 5G terminal, there is still a relatively large gap to meet a power consumption requirement of the internet of things terminal (for example, standby duration requirements of more than one year for an industrial sensor terminal and more than two weeks for a wearable terminal).

Due to device size limitations, a smartwatch usually comes with a small-capacity (200-600 mAh) battery. Analysis of power consumption and standby duration of the smartwatch in the idle mode is shown in Table 2. A discontinuous reception (discontinuous reception, DRX) cycle is 1.28s.

**Table 2 Analysis of power consumption and standby duration of a 5G smartwatch in the idle mode (DRX cycle: 1.28s)**

| Terminal type | Average current in the idle mode | Average power consumption in the idle mode | Standby duration (200 mAh) | Standby duration (400 mAh) | Standby duration (600 mAh) |
|---|---|---|---|---|---|
| 4G smartwatch | 4 mA | 16 mW | 2.08 days | 4.16 days | 6.25 days |
| 5G smartwatch | 7 mA | 28 mW | 1.19 days | 2.38 days | 3.57 days |

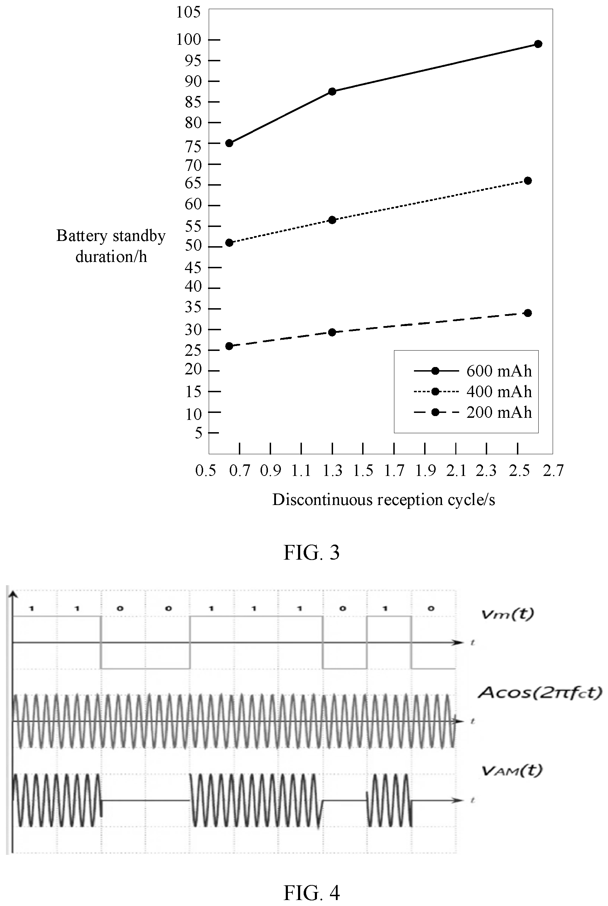

Analysis of the standby duration of the 5G smartwatch in different DRX cycles (0.64s, 1.28s, and 2.56s) is shown in FIG. 3.

There is still a relatively large gap between the standby duration of the 5G smartwatch and a target of two weeks. It should be noted that herein, it is assumed that the terminal is always in an idle standby mode, and there is no uplink or downlink service. In an actual scenario, considering a requirement for service sending/receiving, the standby time is shorter. Therefore, it is necessary to continue to explore, in 5G-advanced (5G-advanced), a technical solution that can exponentially increase the standby duration of the terminal. To meet this requirement, information technology of low-power wake-up receiver and wake-up signal is proposed.

In a 5G mobile terminal, a low-power wake-up receiver is introduced on the basis of an existing communication unit to process information about a wake-up signal, so as to maintain a relatively low latency while reducing power consumption. FIG. 1 is a schematic diagram of a structure of a low-power terminal. The terminal may be divided into a main communication unit and a wake-up receiver unit. When there is no service requirement, the terminal turns off the main communication unit, and turns on only the wake-up receiver unit. When a network needs to communicate with the terminal, information about a low-power wake-up signal may be sent. After successfully detecting the information about the wake-up signal, the wake-up receiver unit on the terminal side triggers the main communication unit to turn on to establish a communication connection to the network to complete service sending and receiving.

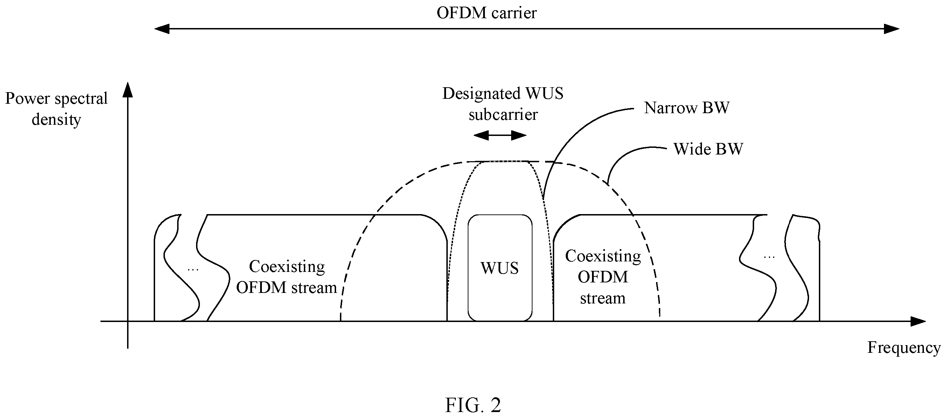

However, a newly introduced signal, namely, the low-power wake-up signal, needs to be simple to detect to reduce power consumption. In addition, FIG. 2 is a schematic diagram of compatibility between a low-power wake-up signal and an existing signal waveform. The low-power wake-up signal needs to be compatible with the existing signal waveform, to avoid interference with an existing 5G terminal.

Based on the foregoing principle, the existing 3GPP determines that an on-off keying (on-off keying, OOK) signal may be used as the low-power wake-up signal. OOK is a special case of amplitude-shift keying (amplitude-shift keying, ASK) modulation. If one amplitude is 0 and the other amplitude is not 0, it is OOK. Binary on-off keying, also referred to as binary amplitude-shift keying (2ASK), uses a unipolar non-return-to-zero code sequence to control on and off of a sinusoidal carrier.

FIG. 4 is a schematic diagram of a principle of OOK modulation, where *Vm(t)* is a to-be-sent digital signal, *Acos(2πfct)* is an unmodulated carrier, and *VAM(t)* is an OOK-modulated carrier signal. The modulation principle of OOK is used to control one amplitude to be 0 and the other amplitude to be non-zero.

The following two OOK-based waveform generation methods are further determined.

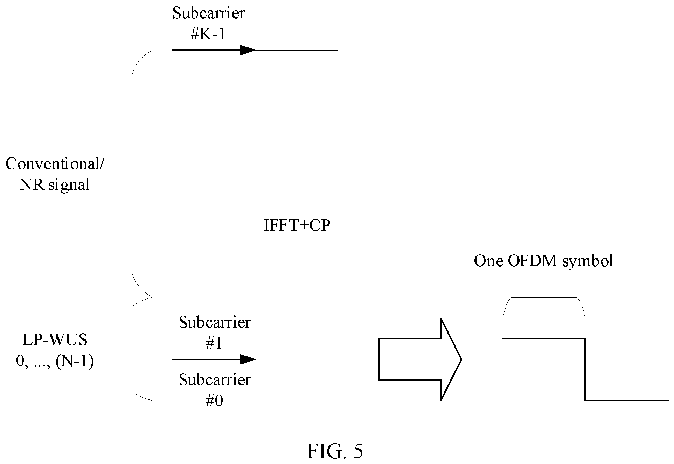

FIG. 5 is a schematic diagram of waveform generation in OOK1, characterized by there being a single bit on one orthogonal frequency division multiplexing (orthogonal frequency division multiplexing, OFDM) symbol. Subcarriers of the LP-WUS are as follows:
OOK=1 indicates that all the subcarriers are modulated; and
OOK=0 indicates that all the subcarriers have zero power.

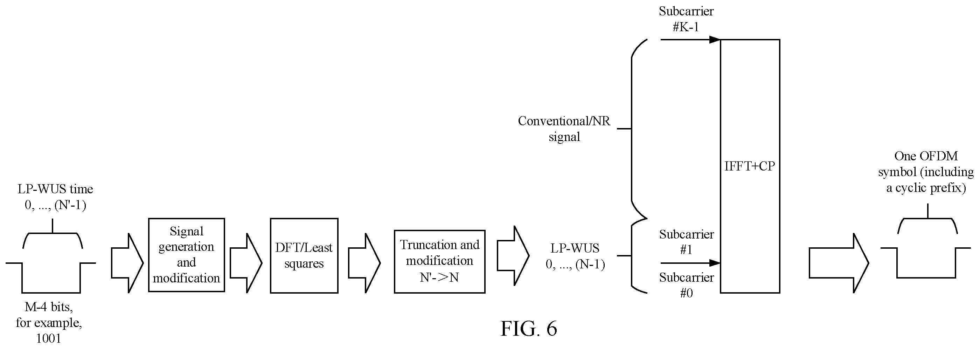

FIG. 6 is a schematic diagram of beam generation in OOK4. An OOK signal with M bits in time domain is converted.

Modulated data information of N subcarriers is generated through transform (DFT/least squares).

N' samples are generated (generate) from the M bits.

Signal modification (modification) may or may not be used.

Truncation (truncation) or other modification (modification) may or may not be used. If truncation or other modification cannot be used, N=N'.

N' may be equal to K.

However, in the two manners of OOK1 and OOK4, there is a problem of frequency domain concentration in a generated waveform. An improved method is to select a sequence for modulating the OOK signal, for example, an M sequence or a ZC sequence, to spread frequency domain distribution, thereby combating selective fading in frequency domain. However, after the sequence is introduced, both the OOK signal and the sequence can carry information about the LPWUS. In this case, how the information should be specifically carried?

Therefore, this application provides a communication solution. A network device sends a first signal to a terminal. The first signal includes an OOK signal modulated by a sequence. The first signal carries information about a wake-up signal. The information about the wake-up signal is carried in the OOK signal, or the information about the wake-up signal is carried in the OOK signal and the sequence. Therefore, an optimized solution for transferring information about a wake-up signal between the network device and the terminal is provided.

The technologies provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, or a converged system of a plurality of systems, or a future communication system, for example, a 6G communication system. The 5G communication system may also be referred to as a new radio (new radio, NR) system.

The technical solutions provided in this application may be applied to a plurality of scenarios, for example, machine to machine (machine to machine, M2M), macro-micro communication, enhanced mobile broadband (enhanced mobile broadband, eMBB), ultra-reliable and low-latency communication (ultra reliable&low latency communication, uRLLC), massive machine type communication (massive machine type communication, mMTC), and other scenarios. These scenarios may include but are not limited to a communication scenario between terminals, a communication scenario between network devices, a communication scenario between a network device and a terminal, and the like. The network device includes a network device and a core network device. The following uses application to the communication scenario between the network device and the terminal as an example for description.

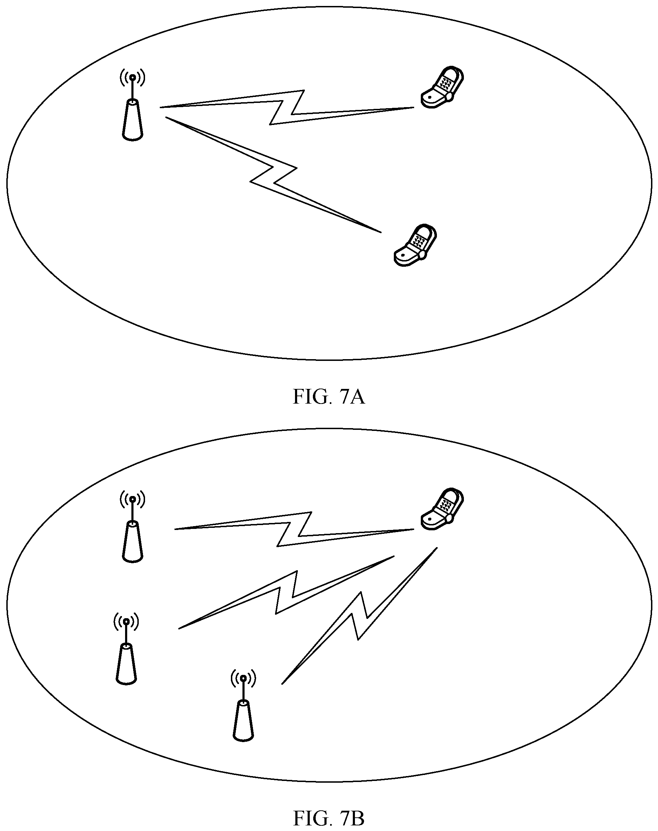

FIG. 7A is a schematic diagram of a communication system according to an embodiment of this application. The communication system may include one or more network devices (only one network device is shown in FIG. 7A) and one or more terminals connected to the network device. One network device may transmit data or control signaling to one or more terminals. In another communication system shown in FIG. 7B, a plurality of network devices may simultaneously transmit data or control signaling to one terminal.

In the communication system, the network device may be an entity, on a network side, that is configured to transmit or receive a signal. The network device may be an access device through which a terminal device accesses the wireless communication system in a wireless manner. For example, the network device may be a base station. The base station may broadly cover the following various names, or may be replaced with the following names, for example, a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmitting and receiving point, TRP), a transmission point (transmitting point, TP), a master station (master eNB, MeNB), a secondary station (secondary eNB, SeNB), a multi-standard radio (multi-standard radio, MSR) node, a home base station, a network controller, an access node, a wireless node, an access point (access point, AP), a transmission node, a transceiver node, a baseband unit (building baseband unit, BBU), a remote radio unit (remote radio unit, RRU), an active antenna unit (active antenna unit, AAU), a radio head (remote radio head, RRH), a centralized unit (centralized unit, CU), a distributed Unit (distributed unit, DU), a radio unit (radio unit, RU), a centralized unit control plane (CU control plane, CU-CP) node, a centralized unit user plane (CU user plane, CU-UP) node, and a positioning node. The base station may be a macro base station, a micro base station, a relay node, a donor node, or the like, or a combination thereof. The network device may alternatively be a communication module, a modem, or a chip disposed in the foregoing device or apparatus. The network device may alternatively be a mobile switching center, a device that functions as a base station in device-to-device (device-to-device, D2D), vehicle-to-everything (vehicle-to-everything, V2X), and machine-to-machine (machine-to-machine, M2M) communication, a network-side device in a 6G network, a device that functions as a base station in a future communication system, or the like. The network device may support networks with a same access technology or different access technologies. A specific technology and a specific device form used by the network device are not limited in embodiments of this application.

The network device may be fixed or mobile.

In this application, a communication apparatus configured to implement a function of the access network may be an access network device, may be a network device with a part of functions of the access network, or may be an apparatus that can support implementation of a function of the access network, for example, a chip system, a hardware circuit, a software module, or a hardware circuit plus a software module. The apparatus may be installed in the access network device or used in combination with the access network device. In the method in this application, an example in which the communication apparatus configured to implement the function of the access network device is an access network device is used for description.

The terminal may be an entity, on a user side, that is configured to receive or transmit a signal, for example, a mobile phone. The terminal device may be used to connect people, objects, and machines. The terminal device may communicate with one or more core networks through the network device. The terminal device includes a handheld device with a wireless connection function, another processing device connected to a wireless modem, a vehicle-mounted device, or the like. The terminal device may be a portable, pocket-sized, handheld, computer-built-in, or vehicle-mounted mobile apparatus. The terminal device may be widely applied to various scenarios, for example, cellular communication, D2D, V2X, point-to-point (point-to-point, P2P), machine-to-machine (machine-to-machine, M2M), machine type communication (machine type communication, MTC), internet of things (internet of things, IoT), virtual reality (virtual reality, VR), augmented reality (augmented reality, AR), industrial control, self-driving, telemedicine, smart grid, smart furniture, smart office, smart wearable, smart transportation, smart city, drone, robot, remote sensing, passive sensing, positioning, navigation and tracking, and self-delivery and mobility. Some examples of the terminal device are user equipment (user equipment, UE) in a 3GPP standard, a fixed device, a mobile device, a handheld device, a wearable device, a cellular phone, a smartphone, a session initiation protocol (session initiated protocol, SIP) phone, a notebook computer, a personal computer, a smart book, a vehicle, a satellite, a global positioning system (global positioning system, GPS) device, a target tracking device, a drone, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal in a smart city (smart city) such as a smart fuel dispenser, a terminal device on a high-speed train, a wireless terminal in a smart home (smart home), for example, a smart speaker, a smart coffee maker, or a smart printer, and the like. The terminal device may be the wireless device in the foregoing scenarios or an apparatus disposed in the wireless device, for example, a communication module, a modem, or a chip in the foregoing device. The terminal device may also be referred to as a terminal, a terminal device, user equipment, a mobile station (mobile station, MS), a mobile terminal (mobile terminal, MT), or the like. The terminal device may alternatively be a terminal device in a future wireless communication system. The terminal device may be used in a dedicated network device or a general-purpose device. A specific technology and a specific device form used by the terminal device are not limited in embodiments of this application.

In this application, a communication apparatus configured to implement a function of the terminal may be a terminal, may be a terminal device with a part of functions of the terminal, or may be an apparatus that can support implementation of a function of the terminal, for example, a chip system. The apparatus may be installed in the terminal or used in combination with the terminal. In this application, the chip system may include a chip, or may include a chip and another discrete device. In the technical solutions provided in this application, an example in which the communication apparatus is a terminal or UE is used for description.

Optionally, the wireless communication system usually includes a cell. The network device provides cell management, and the network device provides a communication service to a plurality of mobile stations (mobile station, MS) in the cell. The network device includes a baseband unit (baseband unit, BBU) and a remote radio unit (remote radio unit, RRU). The BBU and the RRU may be placed at different positions. For example, the RRU is remotely placed in a high-traffic area, and the BBU is placed in a central equipment room. The BBU and the RRU may be placed in a same equipment room. The BBU and the RRU may alternatively be different parts in a same rack. Optionally, one cell may correspond to one carrier or one component carrier.

In some deployments, the network device in embodiments of this application may be a CU, a DU, a device including a CU and a DU, or a device including a CU control plane node (central unit-control plane (central unit-control plane, CU-CP)), a CU user plane node (central unit-user plane (central unit-user plane, CU-UP)), and a DU node. For example, the network device may include a gNB-CU-CP, a gNB-CU-UP, and a gNB-DU.

Optionally, in embodiments of this application, the terminal or the network device includes a hardware layer, an operating system layer running at the hardware layer, and an application layer running at the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a windows operating system, that implement service processing by using a process (process). The application layer includes applications such as Browser, Contacts, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be a terminal or a network device, or a functional module that can invoke the program and execute the program in a terminal or a network device.

In other words, a related function of the terminal or the network device in embodiments of this application may be implemented by one device, may be jointly implemented by a plurality of devices, or may be implemented by one or more functional modules in a device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

Communication between the network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal may further include an artificial intelligence (artificial intelligence, AI) layer, used transmit data related to an AI function.

Data transmission between the network device and the terminal is used as an example. Data transmission needs to be performed through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Based on a data transmission direction, there is sending or receiving, and each of the foregoing layers is divided into a sending part and a receiving part. Downlink data transmission is used as an example. After obtaining data from an upper layer, the PDCP layer transfers the data to the RLC layer and the MAC layer. Then, the MAC layer generates a transport block, and then performs wireless transmission through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal may further have an application layer and a non-access stratum. The application layer may be used to provide a service to an application program installed in the terminal. For example, downlink data received by the terminal may be sequentially transmitted through the physical layer to the application layer and then provided to the application program by the application layer. For another example, the application layer may obtain data generated by the application program and sequentially transmit the data to the physical layer, to transmit the data to another communication apparatus. The non-access stratum may be used to forward user data, for example, forward uplink data received from the application layer to the SDAP layer, or forward downlink data received from the SDAP layer to the application layer.

It should be understood that quantities and types of devices in the communication systems shown in FIG. 7A and FIG. 7B are merely examples. This application is not limited thereto. In actual application, the communication system may further include more terminals and more access network devices, and may further include another network element. For example, a core network device and/or a network element configured to implement an artificial intelligence function may be included.

It may be understood that all or a part of functions implemented by one or more of the terminal, the access network device, the core network device, or the network element configured to implement an artificial intelligence function may be virtualized, that is, implemented by one or more of a dedicated processor or a general-purpose processor and a corresponding software module. The terminal device and the access network device relate to an air interface transmission interface, and a sending/receiving function of the interface may be implemented by hardware. The core network device such as an operation administration and maintenance (operation administration and maintenance, OAM) network element may be virtualized. Optionally, a function of one or more of a virtualized terminal device, access network device, core network device, or network element configured to implement an artificial intelligence function may be implemented by a cloud device, for example, implemented by a cloud device in an over the top (over the top, OTT) system.

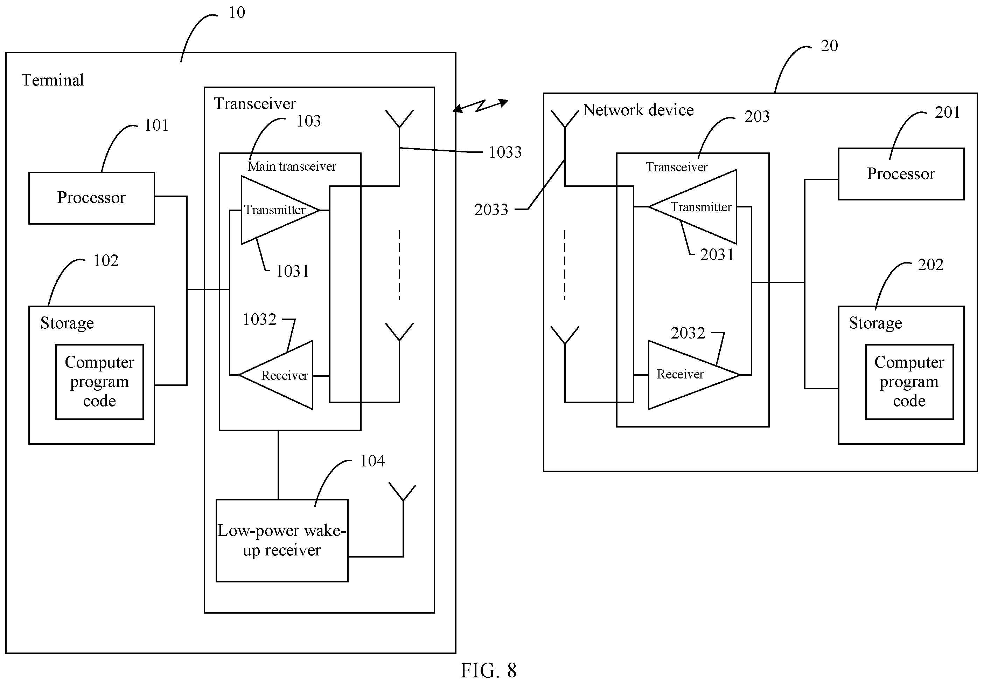

Communication between the network device and the terminal in the communication systems shown in FIG. 7A and FIG. 7B may alternatively be represented in another form. As shown in FIG. 8, a terminal 10 includes a processor 101, a storage 102, and a transceiver. The transceiver may include a main transceiver 103 (a main communication unit may include the main transceiver) and an LP-WUS transceiver 104 (for example, an LP-WUR (low power wake up radio), low-power wake-up receiver, also referred to as a wake-up receiver unit or a wake-up receiver WUR). The WUR is configured to receive a WUS. The main transceiver may be understood as an existing transceiver of UE, and is configured to transmit a conventional signal (which may be understood as an existing signal different from the WUS) with a network device. The main transceiver 103 includes a transmitter 1031, a receiver 1032, and an antenna 1033. A network device 20 includes a processor 201, a storage 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the network device 20 through the antenna 1033. The transmitter 2031 may be configured to send transmission control information to the terminal 10 through the antenna 2033. The receiver 2032 may be configured to receive, through the antenna 2033, transmission feedback information sent by the terminal 10.

The processor 101/the processor 201 may be a CPU, a microprocessor, an application-specific integrated circuit (application-specific integrated circuit, ASIC), or one or more integrated circuits configured to control program execution of the solutions in this application.

The storage 102/the storage 202 may be an apparatus with a storage function. For example, the storage may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The storage may exist independently, and is connected to the processor through a communication line. Alternatively, the storage may be integrated with the processor.

The storage 102/storage 202 is configured to store computer-executable instructions for executing the solutions in this application, and the processor 101/processor 201 controls execution. The processor 101/processor 201 is configured to execute the computer-executable instructions stored in the storage 102/storage 202, to implement the communication method provided in embodiments of this application.

Alternatively, in embodiments of this application, the processor 101/processor 201 may perform a processing-related function in the communication method provided in the following embodiments of this application.

The computer-executable instructions in this embodiment of this application may also be referred to as application program code. This is not specifically limited in this embodiment of this application.

Based on the foregoing communication system, the communication method provided in this application is described below.

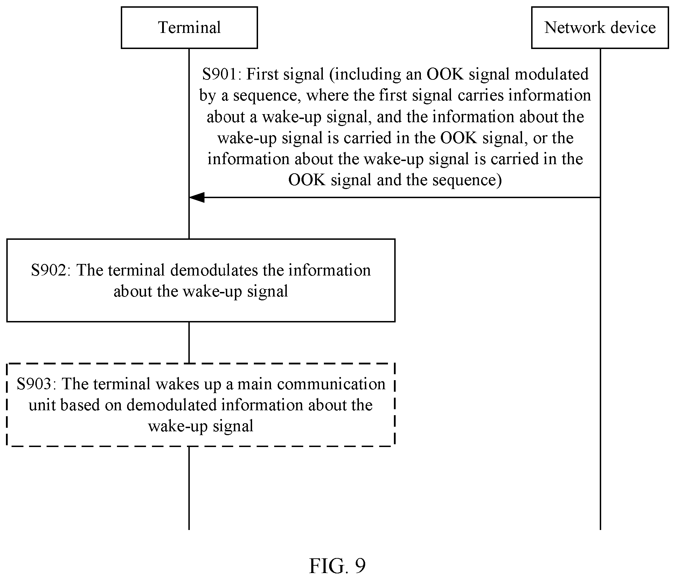

FIG. 9 is a schematic flowchart of a communication method according to an embodiment of this application. In an example, the method may include the following steps.

S901: A network device sends a first signal to a terminal. Correspondingly, the terminal receives the first signal.

The first signal includes an OOK signal modulated by a sequence. The first signal carries information about a wake-up signal. The information about the wake-up signal is carried in the OOK signal, or the information about the wake-up signal is carried in the OOK signal and the sequence.

For example, the modulation sequence may be referred to as an overlaid sequence. The sequence may be understood as a sequence used to modulate the OOK signal. For example, the OOK signal may be modulated by using a ZC sequence or an M sequence.

For example, that the information about the wake-up signal is carried in the OOK signal may be understood as that the OOK signal carries all of the information about the wake-up signal.

For example, that the information about the wake-up signal is carried in the OOK signal and the sequence may be understood as that each of the OOK signal and the sequence carry a part of the information about the wake-up signal. The information that is about the wake-up signal and that is carried in each of the OOK signal and the sequence forms the wake-up signal.

For example, the wake-up signal may be the foregoing LP-WUS signal. The wake-up signal is used to wake up a main communication unit.

Further, the method may further include the following steps (indicated by a dashed line in FIG. 9).

S902: The terminal demodulates the information about the wake-up signal.

For a manner in which the information about the wake-up signal is carried, there may be the following several implementations.

In an implementation, the information about the wake-up signal is carried in the OOK signal and the sequence.

In this implementation, the following several examples are further included.

Example 1: The information about the wake-up signal includes N bits, the N bits are bits before encoding, the N bits include N1 bits and N2 bits, and N=N1+N2. The N1 bits are carried in the OOK signal, and the N2 bits are carried in the sequence. All of N, N1, and N2 are positive integers.

The N1 bits and the N2 bits are information that needs to be demodulated, and final information may be obtained only after complete demodulation is performed. In this case, the demodulating the information about the wake-up signal includes: demodulating the N1 bits and the N2 bits.

For example, it is assumed that the information about the WUS is 12 bits, that is, N=12, the 12 bits are bits before encoding, and the 12 bits may be divided into 8 bits+4 bits, that is, N1=8, and N2=4. The 8 bits may be carried in the OOK signal, and the 4 bits may be carried in the sequence.

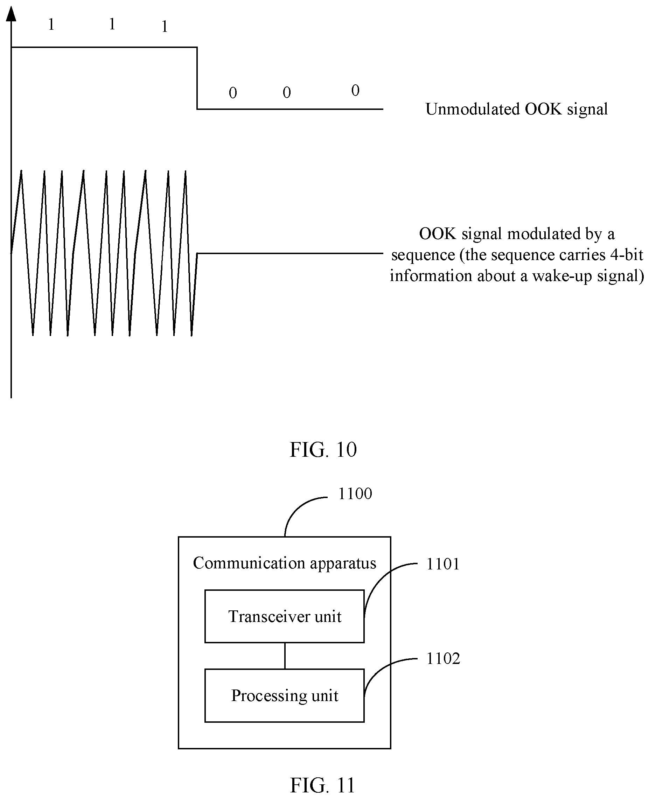

FIG. 10 is a schematic diagram of an OOK signal and a sequence carrying information about a wake-up signal according to an embodiment of this application. It is assumed that the information about the wake-up signal includes 10 bits, and the OOK signal modulated by the sequence carries the 10-bit information about the wake-up signal. The OOK signal carries 6 bits (for example, "111000" shown in FIG. 10), and the sequence carries 4 bits.

Example 2: The information about the wake-up signal includes N bits, the N bits include N1 bits and N2 bits, and N=N1+N2. The N1 bits are carried in the OOK signal, and the N2 bits are carried in the sequence. The N1 bits are primary information, and the N2 bits are secondary information. For example, the N2 bits are supplementary information or refined information for the N1 bits. In this case, the demodulating the information about the wake-up signal includes: demodulating the N1 bits or demodulating the N1 bits and the N2 bits based on a capability of the terminal. That is, for a low-capability terminal, only the N1 bits may be demodulated. For a high-capability terminal, the N1 bits and the N2 bits may be demodulated.

For example, the information about the wake-up signal is a group identifier (group id), and is divided into 6 bits+2 bits. If the terminal demodulates only the first 6 bits, most significant 6-bit group information may be obtained, and paging precision is lower. If the 2 more bits are demodulated, complete group information may be obtained.

For another example, if the first N1 bits are a group identifier, and the N2 bits are an identifier of the terminal (UE id), the first N1 bits are primary information or important information, and the last N2 bits are secondary information. The low-capability terminal possibly can obtain only the first N1 bit information. However, the high-capability terminal may obtain more information, thereby improving paging accuracy. For example, the N2 bits are information such as system information exchange, ETWS/CMAS information, tracking area information, and radio access network area information (SI change and ETWS/CMAS information, tracking area information, and RAN area information).

Example 3: The information about the wake-up signal includes N bits, the N bits include N1 bits and N2 bits, and N=N1+N2. The N1 bits are carried in the OOK signal, and the N2 bits are carried in the sequence. The N2 bits are primary information, and the N1 bits are secondary information. For example, the N1 bits are supplementary information for the N2 bits. In this case, the demodulating the information about the wake-up signal includes: demodulating the N1 bits and the N2 bits. That is, the terminal needs to demodulate the N1 bits and the N2 bits to obtain final information.

For example, the N1 bits carry information such as SI change and ETWS/CMAS information, tracking area information, and RAN area information, and the N2 bits carry information such as a group identifier.

Example 4: The information about the wake-up signal includes N bits, the N bits are encoded bits, the N bits include N1 bits and N2 bits, and N=N1+N2. The N1 bits are carried in the OOK signal, and the N2 bits are carried in the sequence. All of N, N1, and N2 are positive integers. In this case, the demodulating the information about the wake-up signal includes: demodulating the N1 bits or demodulating the N1 bits and the N2 bits. Transmission reliability is improved after the N1 bits are encoded. Therefore, only the N1 bits may be demodulated. Alternatively, if the terminal has a relatively high capability, the N1 bits and the N2 bits may be demodulated, to improve demodulation reliability.

For example, if the information about the WUS is 12 bits, that is, N=12, the 12 bits may be divided into 8 bits+4 bits. The 8 bits may be first encoded through Manchester coding to form more than 8 bits of information, for example, 16 bits of information, and then carried in the OOK signal (it may be understood that a quantity of encoded bits may alternatively remain unchanged, that is, the 8 bits may be encoded in a specific encoding manner to form 8 bits of information, and then carried in the OOK signal). The 4 bits may be encoded to form more than 4 bits of information, for example, 8 bits of information, and carried in the sequence (it may be understood that a quantity of encoded bits may alternatively remain unchanged, that is, the 4 bits may be encoded in a specific encoding manner to form 4 bits of information, and then carried in the sequence).

Example 5: The information about the wake-up signal includes N bits, the N bits are separately carried in the OOK signal and the sequence, and N is a positive integer. That is, the OOK signal and the sequence carry the same N bits.

The N bits may be original bits, namely, bits before encoding. The N bits may be carried in the OOK signal through encoding, for example, Manchester coding. The N bits may be carried in the sequence by using different sequences.

The N bits may alternatively be encoded bits.

In the foregoing implementation, there may be a plurality of sequences for demodulating the OOK signal. When the information about the wake-up signal is carried in the OOK signal and the sequence, and the OOK signal is modulated by using different sequences, a bit value corresponding to the sequence being a preset second sequence is different from a bit value corresponding to the sequence being a preset third sequence. For example, it is assumed that the information about the wake-up signal includes 10 bits, the OOK signal carries 6 bits, and the sequence carries 4 bits. In this case, if the OOK signal is modulated by using a sequence 1, information about the wake-up signal carried in the sequence 1 is "0001"; if the OOK signal is modulated by using a sequence 2, information about the wake-up signal carried in the sequence 2 is "0010"; and so on. The network device and the terminal pre-store a bit value of the information about the wake-up signal corresponding to a preset sequence (for example, the sequence 1 and the sequence 2). When receiving the first signal, the terminal can obtain the information about the wake-up signal through decoding.

In another implementation, the information about the wake-up signal may be carried in the OOK signal, or carried in the OOK signal and the sequence. If a part of the information about the wake-up signal is carried in the sequence, it needs to be explicitly or implicitly indicated. That is, before the information about the wake-up signal is demodulated, it needs to be determined whether the sequence carries a part of the information about the wake-up signal.

For how to determine whether the sequence carries a part of the information about the wake-up signal, the following several examples are further included.

Example 1: The determining whether the sequence carries a part of the information about the wake-up signal includes: The network device sends first indication information to the terminal. The first indication information is used to indicate whether the sequence carries a part of the information about the wake-up signal. That is, the network device may explicitly indicate, by using the first indication information, whether the sequence carries a part of the information about the wake-up signal.

For example, the first indication information is carried in any one of the following signals: system information (system information, SI) (the system information may also be referred to as a system message), radio resource control (radio resource control, RRC) signaling, medium access control-control element (medium access control-control element, MAC-CE), or downlink control information (downlink control information, DCI).

Example 2: The method further includes: The network device sends configuration information to the terminal. The configuration information is used to indicate a signal quality threshold. That the terminal determines whether the sequence carries a part of the information about the wake-up signal includes: When signal quality of the terminal is greater than or equal to the signal quality threshold, the terminal determines that the sequence does not carry a part of the information about the wake-up signal; or when signal quality of the terminal is less than the signal quality threshold, the terminal determines that the information about the wake-up signal is carried in the OOK signal and the sequence.

That is, the network device may carry the information about the wake-up signal in the sequence. However, whether the terminal demodulates the information about the wake-up signal carried in the sequence needs to be determined by the terminal based on the signal quality threshold. The signal quality threshold may be a new LL-RSRP threshold configured by the network device, a threshold for another measurement quantity, or an existing RSRP decision threshold for measurement relaxation reused under a condition of supporting the LP-WUS. The terminal determines, based on the threshold, whether to demodulate the sequence.

In addition, the network device may determine, based on first information reported by the terminal, whether to carry the information about the wake-up signal in the sequence. The first information includes signal quality such as reference signal received power (reference signal receiving power, RSRP) and reference signal received quality (reference signal receiving quality, RSRQ). Similarly, the terminal may determine, based on the threshold, whether the network device carries a part of the information about the wake-up signal in the sequence.

Example 3: The method further includes: The terminal sends second indication information to the network device. The second indication information is used to indicate a capability of the terminal and/or a type of the terminal. That the terminal determines whether the sequence carries a part of the information about the wake-up signal includes: The terminal determines, based on the capability of the terminal and/or the type of the terminal, whether the sequence carries a part of the information about the wake-up signal.

That is, the network device implicitly determines, based on the capability and/or the type of the terminal reported by the terminal, whether to carry a part of the information about the wake-up signal in the sequence. For example, for a terminal with a strong capability, a part of the information about the wake-up signal is fixedly carried in the sequence. For an unsupported terminal, a part of the information about the wake-up signal is not carried in the sequence. The terminal may perform corresponding demodulation based on the capability and/or the type of the terminal. That is, if the terminal has a strong capability or supports demodulation, the sequence is demodulated; or if the terminal has a weak capability or does not support demodulation, the sequence is not demodulated.

In addition, a case in which a part of the information about the wake-up signal is not carried in the sequence may be further indicated by using a preset first sequence. For example, if the sequence is a ZC sequence whose root sequence index is 0, it indicates that no information about the wake-up signal is carried in the sequence. For another example, if the sequence is an M sequence initialized by using a fixed radio network temporary identifier (radio network temporary identity, RNTI), it indicates that no information about the wake-up signal is carried in the sequence.

Example 4: That the terminal determines whether the sequence carries a part of the information about the wake-up signal includes: determining, based on at least one of a bandwidth size, a signal detection manner, or a waveform generation method, whether the sequence carries a part of the information about the wake-up signal.

For example, when the network device and the terminal determine to transmit the signal by using high bandwidth, because transmission reliability of the signal is improved when the signal is transmitted by using the high bandwidth, the information about the wake-up signal may not be carried in the sequence. Alternatively, when the network device and the terminal determine to transmit the signal by using high bandwidth, the information about the wake-up signal may be carried in the sequence.

For another example, the signal detection manner includes a continuous detection manner and a periodic detection manner. When the network device and the terminal determine to detect the signal in the continuous detection manner, because the continuous detection may improve demodulation performance through repeated detection, the information about the wake-up signal may not be carried in the sequence. Alternatively, when the network device and the terminal determine to detect the signal in the continuous detection manner, the information about the wake-up signal may be carried in the sequence.

For another example, if the waveform generation method is OOK-1, because OOK-1 may be used under a relatively poor channel condition, the information about the wake-up signal may not be carried in the sequence. If the waveform generation method is OOK-4, because OOK-4 may be used under a relatively good channel condition (for example, OOK-4 may require better demodulation performance), and spectral efficiency may be improved by adjusting an M value, the information about the wake-up signal may be carried in the sequence.

Example 5: The OOK signal includes third indication information, and the third indication information is used to indicate whether the information about the wake-up signal is carried in the sequence. That the terminal determines whether the sequence carries a part of the information about the wake-up signal includes: The terminal determines, based on the third indication information, whether the sequence carries a part of the information about the wake-up signal.

For example, the first N1 bits of the OOK signal are fixedly used to indicate whether the sequence carries the information about the wake-up signal, and the terminal determines, based on a demodulation result, whether to continue to demodulate the sequence. For example, N1=1. When a value of the 1 bit is "1", it is used to indicate that the sequence carries the information about the wake-up signal. When a value of the 1 bit is "0", it is used to indicate that the sequence does not carry the information about the wake-up signal.

For example, the sequence is a ZC sequence or an M sequence.

Further, the following step (indicated by a dashed line in FIG. 9) may be further included.

S903: The terminal wakes up the main communication unit based on demodulated information about the wake-up signal.

After the terminal obtains the information about the wake-up signal through demodulation, as shown in FIG. 1, the main communication unit of the terminal may be woken up based on the demodulated information about the wake-up signal.

According to the communication method provided in embodiments of this application, a network device sends a first signal to a terminal. The first signal includes an OOK signal modulated by a sequence. The first signal carries information about a wake-up signal. The information about the wake-up signal is carried in the OOK signal, or the information about the wake-up signal is carried in the OOK signal and the sequence. Therefore, an optimized solution for transferring information about a wake-up signal between the network device and the terminal is provided.

In this application, "sending information to ... (for example, a terminal)" or a related description in the accompanying drawings may be understood as that a destination end of the information is the terminal, and may include directly or indirectly sending the information to the terminal. "Receiving information from ... (for example, a terminal)" or "receiving information from ... (for example, a terminal)", or a related description in the accompanying drawings may be understood as that a source end of the information is the terminal, and may include directly or indirectly receiving the information from the terminal. Necessary processing, for example, format change, may be performed on the information between the source end and the destination end during information sending. However, the destination end may understand valid information from the source end. Similar descriptions in this application may be understood similarly. Details are not described herein.

It may be understood that in this application, an example in which the terminal and the network device are used as execution bodies of the interaction description is used for description. However, the execution bodies of the interaction description are not limited in this application. For example, the terminal in the method provided in this application may alternatively be a chip, a chip system, or a processor applied to the terminal, or may be a logical node, a logical module, or software that can implement all or a part of the terminal. The network device in the method provided in this application may alternatively be a chip, a chip system, or a processor applied to the network device, or may be a logical node, a logical module, or software that can implement all or a part of functions of the network device.

It may be understood that in the foregoing embodiments, the methods and/or the steps implemented by the terminal may alternatively be implemented by a part (for example, a chip or a circuit) that can be used in the terminal, and the methods and/or the steps implemented by the network device may alternatively be implemented by a part (for example, a chip or a circuit) that can be used in the network device.

The communication method provided in embodiments of this application is mainly described above. Correspondingly, an embodiment of this application further provides a communication apparatus. The communication apparatus is configured to implement the foregoing methods. The communication apparatus may be the terminal in the foregoing method embodiments, or may be a part that can be used in the terminal. Alternatively, the communication apparatus may be the network device in the foregoing method embodiments, or may be a part that can be used in the network device. It may be understood that to implement the foregoing functions, the communication apparatus includes corresponding hardware structures and/or software modules for performing the functions. A person skilled in the art should be easily aware that the units and algorithm steps in the examples described with reference to embodiments disclosed in this specification can be implemented in a form of hardware or a combination of hardware and computer software in this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, division into the functional modules may be based on corresponding functions, or two or more functions may be integrated into one processing unit. The integrated module may be implemented in a form of hardware, or may be implemented in a form of a software functional module. It should be noted that in embodiments of this application, division into the modules is an example, and is merely logical function division. In actual implementation, another division manner may be used.

Based on a same concept of the foregoing communication method, this application further provides the following communication apparatus.

FIG. 11 is a schematic diagram of a structure of a communication apparatus according to an embodiment of this application. The communication apparatus 1100 includes a transceiver unit 1101 and a processing unit 1102.

When the communication apparatus is configured to implement a function of the terminal in the foregoing method embodiments, the transceiver unit 1101 is configured to perform an action performed by the terminal in step S901 in the embodiment shown in FIG. 9, and the processing unit 1102 is configured to perform one or more of steps S902 and S903 in the embodiment shown in FIG. 9.

When the communication apparatus is configured to implement a function of the network device in the foregoing method embodiments, the transceiver unit 1101 is configured to perform an action performed by the network device in step S901 in the embodiment shown in FIG. 9.

For specific implementation of the transceiver unit 1101 and the processing unit 1102, refer to the descriptions in the foregoing method embodiments.

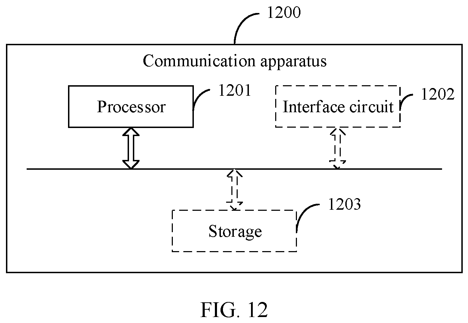

FIG. 12 is a schematic diagram of a structure of another communication apparatus according to an embodiment of this application. The communication apparatus 1200 includes one or more processors 1201 (one processor is illustrated in FIG. 12). Optionally, the communication apparatus 1200 may further include a storage 1203 (represented by a dashed line in FIG. 12). The storage 1203 is configured to store instructions to be executed by the processor 1201, store input data required for the processor 1201 to run instructions, or store data generated after the processor 1201 runs instructions. Optionally, the communication apparatus 1200 may further include an interface circuit 1202 (represented by a dashed line in FIG. 12), and the processor 1201 and the interface circuit 1202 are coupled to each other. It may be understood that the interface circuit 1202 may be a transceiver or an input/output interface.

When the communication apparatus is configured to implement a function of the terminal in the foregoing method embodiments, the interface circuit 1202 is configured to perform an action performed by the terminal in step S901 in the embodiment shown in FIG. 9, and the processor 1201 is configured to perform one or more of steps S902 and S903 in the embodiment shown in FIG. 9.

When the communication apparatus is configured to implement a function of the network device in the foregoing method embodiments, the interface circuit 1202 is configured to perform an action performed by the network device in step S901 in the embodiment shown in FIG. 9.

When the communication apparatus is a chip applied to a terminal, the chip implements a function of the terminal in the foregoing method embodiments. The chip receives information from another module (for example, a radio frequency module or an antenna) in the terminal, where the information is sent by a network device to the terminal. Alternatively, the chip sends information to another module (for example, a radio frequency module or an antenna) in the terminal, where the information is sent by the terminal to a network device.

When the communication apparatus is a chip applied to a network device, the chip implements a function of the network device in the foregoing method embodiments. The chip receives information from another module (for example, a radio frequency module or an antenna) in the network device, where the information is sent by a terminal to the network device. Alternatively, the chip sends information to another module (for example, a radio frequency module or an antenna) in the network device, where the information is sent by the network device to a terminal.

In addition, it should be noted that the transceiver unit and/or the processing unit may be implemented through a virtual module. For example, the processing unit may be implemented through a software functional unit or a virtual apparatus, and the transceiver unit may be implemented through a software function or a virtual apparatus. Alternatively, the processing unit or the transceiver unit may be implemented through a physical apparatus. For example, if the apparatus is implemented through a chip/chip circuit, the transceiver unit may be an input/output circuit and/or a communication interface, to perform an input operation (corresponding to the foregoing receiving operation) and an output operation (corresponding to the foregoing sending operation); and the processing unit is an integrated processor, a microprocessor, or an integrated circuit.

In this application, division into the modules is an example, and is merely logical function division. In actual implementation, another division manner may be used. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that the processor in this embodiment of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides a communication system, including the foregoing communication apparatus.

An embodiment of this application further provides a circuit. The circuit is coupled to a storage. The circuit is configured to perform the methods in the foregoing embodiments. The circuit may include a chip circuit.

When the communication apparatus is a module applied to a network device, the module in the network device implements a function of the network device in the foregoing method embodiments. The module in the network device receives information from another module (for example, a radio frequency module or an antenna) in the network device, where the information is sent by a first node to the network device. Alternatively, the module in the network device sends information to another module (for example, a radio frequency module or an antenna) in the network device, where the information is sent by the network device to a first node. The module in the network device herein may be a baseband chip in the network device, or may be a CU, a DU, or another module, or may be an apparatus in an open radio access network (open radio access network, O-RAN) architecture, for example, an open CU, an open DU, or another apparatus.

It should be noted that the foregoing units or one or more of the units may be implemented through software, hardware, or a combination thereof. When any one of the foregoing units or the units are implemented through software, the software exists in a form of computer program instructions and is stored in a storage, and a processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or a part of the circuits configured to implement a processing function in the foregoing devices, and may implement or perform the methods, the steps, and the logical block diagrams disclosed in this application. The general-purpose processor may be a microprocessor, any conventional processor, or the like. The steps in the methods disclosed with reference to this application may be directly implemented by a hardware processor, or may be implemented by a combination of hardware in a processor and a software module.

When the foregoing unit or the units are implemented through hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and may run necessary software or does not depend on software to perform the foregoing method procedure.

Optionally, an embodiment of this application further provides a chip system, including one or more processors and an interface. The one or more processors are coupled to a storage through the interface. When the one or more processors execute a computer program or instructions in the storage, the chip system is enabled to perform the method in any one of the foregoing method embodiments. Optionally, the chip system may include a chip, or may include a chip and another discrete device. This is not specifically limited in embodiments of this application.

Alternatively, the storage in this application may be a circuit or any other apparatus that can implement a storage function, and is configured to store program instructions and/or data. The storage is any other medium that can be configured to carry or store expected program code in a form of instructions or a data structure and that can be accessed by a computer. However, this is not limited thereto. For example, the storage may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random-access memory (random-access memory, RAM).

It should be understood that in the descriptions of this application, unless otherwise stated, "/" indicates an "or" relationship between associated objects. For example, A/B may indicate A or B, where A and B may be singular or plural. In addition, in the descriptions of this application, unless otherwise stated, "a plurality of" means two or more. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items whose functions and effects are substantially the same. A person skilled in the art may understand that the words such as "first" and "second" do not limit a quantity or an execution sequence, and the words such as "first" and "second" do not indicate a definite difference. In addition, in embodiments of this application, words such as "example" or "for example" are used to represent giving an example, an illustration, or a description. Any embodiment or design solution described as an "example" or "for example" in embodiments of this application should not be construed as being more preferred or advantageous than other embodiments or design solutions. Exactly, use of the words such as "example" or "for example" is intended to present related concepts in a specific manner for ease of understanding.

All or a part of the foregoing embodiments may be implemented by software, hardware, firmware, or any combination thereof. When a software program is used for implementation, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or step, and "a" or "one" does not exclude a case of plurality. A single processor or another unit may implement several functions listed in the claims. Some measures are recorded in dependent claims that are different from each other, but this does not mean that these measures cannot be combined to achieve a better effect.

It may be understood that various numerical numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In the foregoing embodiments, each embodiment is described by focusing on a different aspect. For a part that is not described in detail in an embodiment, refer to related descriptions in another embodiment.

The parts of the apparatus in embodiments of this application may be combined, divided, and deleted based on an actual requirement. A person skilled in the art may integrate or combine different embodiments in this specification and features of the different embodiments.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

## Claims

1. A communication method, wherein the method comprises:
receiving a first signal, wherein the first signal comprises an on-off keying OOK signal modulated by a sequence, the first signal carries information about a wake-up signal, and the information about the wake-up signal is carried in the OOK signal, or the information about the wake-up signal is carried in the OOK signal and the sequence.

2. The method according to claim 1, wherein the method further comprises:
determining whether the sequence carries a part of the information about the wake-up signal.

3. The method according to claim 2, wherein the determining whether the sequence carries a part of the information about the wake-up signal comprises:
receiving first indication information, wherein the first indication information is used to indicate whether the sequence carries a part of the information about the wake-up signal.

4. The method according to claim 3, wherein the first indication information is carried in any one of the following signals: system information SI, radio resource control RRC signaling, a medium access control-control element MAC-CE, or downlink control information DCI.

5. The method according to claim 2, wherein the method further comprises:
receiving configuration information, wherein the configuration information is used to indicate a signal quality threshold; and
the determining whether the sequence carries a part of the information about the wake-up signal comprises:
when signal quality of a terminal is greater than or equal to the signal quality threshold, determining that the sequence carries a part of the information about the wake-up signal.

6. The method according to claim 2, wherein the method further comprises:
sending second indication information, wherein the second indication information is used to indicate a capability of a terminal and/or a type of the terminal; and
the determining whether the sequence carries a part of the information about the wake-up signal comprises:
determining, based on the capability of the terminal and/or the type of the terminal, whether the sequence carries a part of the information about the wake-up signal.

7. The method according to claim 2, wherein the determining whether the sequence carries a part of the information about the wake-up signal comprises:
when the sequence is a preset first sequence, determining that the sequence does not carry a part of the information about the wake-up signal.

8. The method according to claim 2, wherein the determining whether the sequence carries a part of the information about the wake-up signal comprises:
determining, based on at least one of a bandwidth size, a signal detection manner, or a waveform generation method, whether the sequence carries a part of the information about the wake-up signal, wherein the signal detection manner comprises continuous detection and periodic detection, and the waveform generation method comprises OOK-1 and OOK-4.

9. The method according to claim 2, wherein the OOK signal comprises third indication information, the third indication information is used to indicate whether the sequence carries a part of the information about the wake-up signal, and the determining whether the sequence carries a part of the information about the wake-up signal comprises:
determining, based on the third indication information, whether the sequence carries a part of the information about the wake-up signal.

10. The method according to any one of claims 1-9, wherein the method further comprises: waking up a main communication unit based on demodulated information about the wake-up signal.

11. A communication method, wherein the method comprises:
sending a first signal, wherein the first signal comprises an on-off keying OOK signal modulated by a sequence, the first signal carries information about a wake-up signal, and the information about the wake-up signal is carried in the OOK signal, or the information about the wake-up signal is carried in the OOK signal and the sequence.

12. The method according to claim 11, wherein the method further comprises:
sending first indication information, wherein the first indication information is used to indicate whether the sequence carries a part of the information about the wake-up signal.

13. The method according to claim 12, wherein the first indication information is carried in any one of the following signals: system information SI, radio resource control RRC signaling, a medium access control-control element MAC-CE, or downlink control information DCI.

14. The method according to claim 11, wherein the method further comprises:
receiving first information, wherein the first information comprises signal quality of a terminal; and
when the signal quality of the terminal is greater than or equal to a signal quality threshold, carrying a part of the information about the wake-up signal in the sequence.

15. The method according to claim 11, wherein the method further comprises:
receiving second indication information, wherein the second indication information is used to indicate a capability of a terminal and/or a type of the terminal; and
determining, based on the capability of the terminal and/or the type of the terminal, whether to carry a part of the information about the wake-up signal in the sequence.

16. The method according to claim 11, wherein the method further comprises:
when the sequence is a preset first sequence, determining not to carry a part of the information about the wake-up signal in the sequence.

17. The method according to claim 11, wherein the method further comprises:
determining, based on at least one of a bandwidth size, a signal detection manner, or a waveform generation method, whether to carry a part of the information about the wake-up signal in the sequence, wherein the signal detection manner comprises continuous detection and periodic detection, and the waveform generation method comprises OOK-1 and OOK-4.

18. The method according to claim 11, wherein the OOK signal comprises third indication information, and the third indication information is used to indicate whether the sequence carries a part of the information about the wake-up signal.

19. The method according to any one of claims 1-18, wherein the information about the wake-up signal comprises N bits, the N bits comprise N1 bits and N2 bits, N=N1+N2, the N1 bits are carried in the OOK signal, the N2 bits are carried in the sequence, and all of N, N1, and N2 are positive integers.

20. The method according to claim 19, wherein the N1 bits are primary information, and the N2 bits are secondary information; or
the N2 bits are mandatory information, and the N1 bits are optional information.

21. The method according to any one of claims 1-18, wherein the information about the wake-up signal comprises N bits, the N bits are separately carried in the OOK signal and the sequence, and N is a positive integer.

22. The method according to any one of claims 19-21, wherein the N bits are bits before encoding; or
the N bits are encoded bits.

23. The method according to any one of claims 1-22, wherein
a bit value corresponding to the sequence being a preset second sequence is different from a bit value corresponding to the sequence being a preset third sequence

24. The method according to any one of claims 1-23, wherein the sequence is a ZC sequence or an M sequence.

25. A communication system, comprising a first communication apparatus and a second communication apparatus, wherein the first communication apparatus is configured to implement the method according to any one of claims 1-10 and 19-24, and the second communication apparatus is configured to implement the method according to any one of claims 11-24.

26. A communication apparatus, comprising a storage, a processor, and a computer program stored in the storage and capable of running on the processor, wherein when the processor executes the computer program, the communication apparatus is enabled to implement the method according to any one of claims 1-10 and 19-24 or implement the method according to any one of claims 11-24.

27. The apparatus according to claim 26, wherein the apparatus further comprises a main transceiver and a low-power wake-up receiver.

28. A chip, wherein the chip is configured to perform the method according to any one of claims 1-24.
